Europäisches Patentamt

European Patent Office

Office européen des brevets

(11) Veröffentlichungsnummer: **0 326 861 B1**

(12) **EUROPÄISCHE PATENTSCHRIFT**

(45) Veröffentlichungstag der Patentschrift: **19.11.92**

(21) Anmeldenummer: **89100849.2**

(22) Anmeldetag: **19.01.89**

(51) Int. Cl.5: **B22F 9/22**, B01J 2/02, B01D 1/18

(54) **Agglomerierte Metall-Verbund-Pulver, Verfahren zu ihrer Herstellung sowie deren Verwendung.**

(30) Priorität: **30.01.88 DE 3802811**

(43) Veröffentlichungstag der Anmeldung:
**09.08.89 Patentblatt 89/32**

(45) Bekanntmachung des Hinweises auf die
Patenterteilung:
**19.11.92 Patentblatt 92/47**

(84) Benannte Vertragsstaaten:
**AT CH DE FR GB LI NL SE**

(56) Entgegenhaltungen:
EP-A- 0 098 944
FR-A- 2 078 508
GB-A- 732 029
US-A- 2 431 691
US-A- 3 418 103

(73) Patentinhaber: **H.C. Starck GmbH & Co. KG
Im Schleeke 78-91
W-3380 Goslar(DE)**

(72) Erfinder: **Schütz, Heinz-Eckart, Dr.
Kollwitzweg 9
W-3380 Goslar(DE)**
Erfinder: **Szesny, Bernhard, Dr.
Kreuzallee 25
W-3394 Langelsheim 3(DE)**
Erfinder: **Krismer, Bruno E., Dr.
Zeppelinstrasse 2
W-3380 Goslar 1(DE)**

(74) Vertreter: **Müller, Gerhard, Dr. et al
BAYER AG Konzernverwaltung RP Patentabteilung
W-5090 Leverkusen 1 Bayerwerk(DE)**

## Beschreibung

Die Erfindung betrifft Metallpulver-Agglomerate aus Einzelpartikeln, die zu mehr als 70 Gew.-% aus einem und/oder mehreren Basismetallen der Elemente Molybdän, Rhenium oder Wolfram und zu dem bis 100 Gew.-% fehlenden Rest aus Bindermetallen aus der Gruppe Eisen, Kobalt, Nickel, Kupfer, Silber, Gold, Palladium, Platin, Rhodium, Chrom und Rhenium bestehen, wobei Rhenium entweder als Basismetall oder als Bindermetall auftritt sowie ein Verfahren zur Herstellung dieser Metallpulver-Agglomerate.

Moderne Sinter-Werkstoffe gelangen zu immer größerer Bedeutung und die Anforderungen an die Werkstoff-Eigenschaften verlangen immer wieder eine Optimierung von meist gegenläugigen Eigenschaften wie z.B. Härte und Zähigkeit. Da in der Regel mit der Verringerung der Korngröße bei metallischen Werkstoffen, Verbundwerkstoffen und Pseudolegierungen auch eine generelle Härtesteigerung erzielt werden kann, ist in der Werkstofftechnologie der Trend zu immer feinkörnigeren Werkstoffspezies deutlich erkennbar.

So sind aus der Literatur, insbesondere zur Herstellung von Kontaktwerkstoffen (z.B. H. Schreiner, "Pulvermetallurgie elektrischer Kontakte", Springer-Verlag Berlin, Göttigen, Heidelberg 1964) Beispiele bekannt, bei denen Verbundwerkstoffe (z.B. AgNi, AgCdO) über eine konventionelle chemische Fällung aus Salzlösungen zunächst als schwerlösliche Verbindungen erhalten werden können, die dann durch nachfolgende thermische Behandlung zersetzt und anschließend zu Metallmischpulvern reduziert werden.

In der EP-B 98 944 werden Legierungs-Verbundpulver, bestehend aus Wolfram-Metallteilchen mit einer dünnen Hülle aus Metallen der Eisengruppenelemente, beschrieben.

Diese sinterfähigen Wolframlegierungspulver werden durch eine spezielle Sprühtrocknung mit simultaner Wasserstoff-Reduktion bei mindestens 800°C erzeugt, wobei ausschließlich von löslichen Verbindungen der Legierungselemente ausgegangen wird. Dieses Verfahren ist deshalb nicht universell anwendbar und wegen des notwendigen hohen Energiebedarfs bei der Reaktions-Sprühtrocknung unverhältnismäßig kostspielig. Darüber hinaus ist die Reduktion der agglomerierten Oxide im freien Fall gemäß der EP-B-98 944 apparativ nur schwierig beherrschbar und auch mit großem technischen Aufwand und hohen Betriebskosten verbunden.

Aufgabe dieser Erfindung war es somit Metallpulver-Agglomerate zur Verfügung zu stellen, die die beschriebenen Nachteile nicht aufweisen. Es werden nun die erfindungsgemäßen Metallpulver-Agglomerate gefunden, die diese Anforderungen erfüllen.

Gegenstand dieser Erfindung sind , Metallpulver-Agglomerate aus Einzelpartikeln, die zu mehr als 70 Gew.-% aus einem und/oder mehreren Basismetallen der Elemente Molybdän, Rhenium oder Wolfram und zu dem bis 100 Gew.-% fehlenden Rest aus Bindermetallen aus der Gruppe Eisen, Kobalt, Nickel, Kupfer, Silber, Gold, Palladium, Platin, Rhodium, Chrom und Rhenium bestehen, wobei Rhenium entweder als Basismetall oder als Bindermetall auftritt, welche dadurch gekennzeichnet sind, daß die Einzelpartikel Korngrößen von kleiner als 2 $\mu$m aufweisen und alle Basismetallpartikel und die Bindermetallpartikel in gleichmäßiger statistischer Verteilung vorliegen.

In einer bevorzugten Ausführungsform weisen diese Metallpulver-Agglomerate einen Sauerstoffgehalt von kleiner als 1,5 Gew.-%, vorzugsweise kleiner als 1,0 auf, die Korngröße der Agglomerate ist kleiner als 300 $\mu$m, die Korngröße der Einzelteilchen ist kleiner als 1 $\mu$m, vorzugsweise kleiner als 0,5 $\mu$m.

Gegenstand dieser Erfindung sind auch Verfahren zur Herstellung der erfindungsgemäßen Metallpulver-Agglomerate.

Zur Gewinnung der vorliegenden erfindungsgemäßen Metall-Verbund-Pulver können Suspensionen z.B. der Oxide oder Hydroxide der Elemente Wolfram, Molybdän und Rhenium als Vorstoffe dienen, aber auch deren lösliche Verbindungen, z.B. Ammonium-Salze wie Ammoniummetawolframat oder Ammoniummolybdat oder Ammoniumperrhenat in Kombination mit löslichen Salzen der Bindermetalle.

Eine Ausführungsform des erfindungsgemäßen Verfahrens besteht darin, daß Verbindungen der Basismetalle und der Bindermetalle in Flüssigkeiten gelöst und/oder homogen suspensiert werden, diese Lösungen und/oder Suspensionen zur Trokkene gebracht werden und der so erhaltene feste Rückstand unterhalb 600°C nachgeröstet wird und anschließend unter reduzierenden Bedingungen bei Temperaturen von 600 bis 1200°C zum Metallpulver umgesetzt werden.

Als Basismetall- bzw. Bindermetallverbindungen sind die Nitrate bevorzugt. Die Bindermetalle können aber auch als unlösliche Verbindungen, z.B. in Form von Oxiden und/oder Hydroxiden eingesetzt werden.

Eine bevorzugte Ausführungsform des erfindungsgemäßen Verfahrens ist dadurch gekennzeichnet, daß als Verbindungen der Basismetalle Mo, Re und W die Oxide und als Verbindungen der Bindermetalle die Nitrate in gemeinsamer wäßriger Suspension eingesetzt werden.

Es kann auch die Verfahrensvariante bevorzugt durchgeführt werden, in der als Verbindungen der Basismetalle Mo, Re und W die Ammoniumsalze der Säureanionen dieser Metalle als Verbindungen der Bindermetalle die Nitrate in gemeinsamer wäßriger Lösung eingesetzt werden.

Man setzt dabei die Verbindungen der
Legierungs-Basis-Metalle und der Bindermetalle in
Form von Lösungen und/oder Suspensionen in ionogenen oder auch nichtionogenen Flüssigkeiten
ein, welche zur Erzeugung von möglichst homogenen Vorstoff-Gemischen zur Trockne gebracht und
im Bedarfsfalle zwecks Ausbildung der wasserfreien Oxidmischungen noch vorgeröstet werden.

In einer besonders bevorzugten Ausführungsform des erfindungsgemäßen Verfahrens wird die
Trocknung der Lösungen und/oder Suspensionen
in Sprühtrockner-Apparaturen durchgeführt. Dieser
Sprühtrocknung schließt sich gegebenenfalls eine
thermische Nachbehandlung an, um die Oxidmischungen zu erhalten. Die Ausgangsmischung muß
zur Stabilisierung der Suspension hinreichend lange intensiv gerührt und fließfähig gehalten werden,
um bei einer sich anschließenden Sprühtrocknung
keine Störungen hervorzurufen.

Im allgemeinen reichen die Bedingungen einer
"normalen" Sprühtrocknungsanlage (ca. 300°C) für
die Trocknungsstufe aus. Um aber Restanionen
aus dem homogenen Salzgemisch zu entfernen,
muß in diesen Fällen eine zusätzliche Pyrolysestufe bei mindestens 600°C nachgeschaltet werden.

Gemäß einer weiteren bevorzugten Ausführungsform wird die Trocknung der Lösungen
und/oder Suspensionen mittels Gefrier-Trocken-
Verfahren durchgeführt.

Aber auch andere bekannte Ausgangsmischungen sind einsetzbar; es ist dabei wesentlich, daß
eine homogene Verteilung der Basismetall- und
Bindermetallverbindungen gewährleistet ist.

Da bei dem vorliegenden Verfahren die bekannte und bewährte Methode der Wasserstoff-
Reduktion zur Anwendung kommt, sind keine besonderen Öfen notwendig. Als vorteilhaft haben
sich jedoch Drehrohröfen erwiesen, die einen kontinuierlichen Betrieb erlauben und in der Einstellung
der Reaktionsparameter sehr einfach zu bedienen
sind.

Eine bevorzugte Ausführungsform des erfindungsgemäßen Verfahrens besteht somit darin, daß
die Umsetzung unter reduzierenden Bedingungen
in einer Wasserstoffatmosphäre in einem Drehrohrrofen kontinuierlich durchgeführt sind.

Selbstverständlich müssen die Öfen allgemein
eine geschlossene Gasatmosphäre ermöglichen,
die alternativ jedoch auch oxidativ (röstend) benutzt
werden können, wie aus den zuvor genannten Verfahrensstufen leicht abzuleiten ist. Weitere bevorzugte Formen von Reduktionsapparaturen sind
Durchschuböfen, wobei Festbettreaktionen in Tiegeln oder Schiffchen durchgeführt werden.

In einer weiteren bevorzugten Ausführungsform
des erfindungsgemäßen Verfahrens wird die Umsetzung unter reduzierenden Bedingungen in einem Schiffchen-Durchschubofen als halbkontinuierliches Verfahren durchgeführt.

Da neben Oxidsuspensionen sich ebenso problemlos lösliche Systeme mit dem gleichen Ergebnis verarbeiten lassen, können nach dem erfindungsgemäßen Verfahren auch solche Systeme zu
Legierungs-Mischpulvern aufbereitet werden, deren
Lösungen störende Anionen wie z.B. Chloride
und/oder Fluoride enthalten. Solche Elemente würden bei einer Reaktions-Sprühtrocknung zu einer
erheblichen Belastung der Umwelt und nicht zuletzt
zu Werkstoff-Korrosionsproblemen der Reaktionsbehälter führen.

Bei der erfindungsgemäßen Reduktion der
Mischoxide der Gruppe Mo, W, Re mit ausgewählten Bindermetalloxiden im Wasserstoffstrom bei
maximal 850°C entstehen hochporöse, sehr feinteilige und daher sehr sinteraktive Pulveragglomerate mit Metall-Partikeln der Elemente Mo, W, Re
im Submicrometerbereich und Matrixmetall- bzw.
Legierungspartikel, die ganz besonders feinkörnig
oder sogar röntgenamorph anfallen.

Es ist auch möglich, daß einzelne als Bindermetalle genannte Elemente (z.B. Rhenium) mit den
erstgenannten Metallen (z.B. Wolfram) bei höheren
Temperaturen Legierungen mit Mischkristallphasen
bilden. Diese fallen jedoch nach der Reduktionsstufe zunächst als heterogene Metall-Verbundpulver
an, bevor sie in einer zusätzlichen Diffusionsstufe
bei höherer Temperatur in die homogene Mischkristallform übergehen.

Für Systeme mit hohem Chrom-Gehalt als Bindermetall (größer als 10 %) müssen die Reduktionstemperaturen bis auf 1000°C gesteigert werden.

Die erfindungsgemäßen agglomerierten Verbundpulver sind bestens geeignet, durch Pressen
und Sintern oder mit sonst üblichen Verfahren der
Pulvermetallurgie Sinterteile hervorzubringen, die
sich durch gleichmäßige Gefügeausbildung, Porenfreiheit und durch extreme Feinkörnigkeit des Kristallgefüges auszeichnen. Derartige Legierungen
erreichen dadurch Höchstwerte in ihren mechanischen Eigenschaften wie Zugfestigkeit, Biegebruchfestigkeit, Härte usw. Diese Eigenschaftskombinationen sind nach konventionellen Verfahren der
Pulvermetallurgie, d.h. durch einfaches Mischen
entsprechend feinteiliger Ausgangskomponenten
praktisch nicht erreichbar.

Die erfindungsgemäßen Metall-Verbundpulver
sind sehr sinteraktiv und lassen sich vorteilhaft
auch ohne das Auftreten von flüssigen Phasen zu
porenfreien Formkörpern sintern, wobei die Gefüge
Korngrößen unter 5 μm und dazu ein sehr enges
Kornverteilungsspektrum aufweisen.

Die nach dem erfindungsgemäßen Verfahren
hergestellten heterogenen Wolfram/Rhenium-Verbundpulver, speziell im Falle der Verwendung homogener Lösungen der Ausgangsstoffe, ergaben im Vergleich zu den bekannten Mischungslegierungspulvern eine nahezu ideale Gleichverteilung der Elemente Wolfram und Rhenium im Sinterkörper. Mit keinem der bisher bekannten pulvermetallurgischen Verfahren erreicht man eine solche Homogenität der Elementverteilung bei der Herstellung von Wolfram/Rhenium-Legierungen. Derartige Legierungen lassen sich bezüglich des Wolfram-Rhenium-Verhältnisses in weiten Grenzen variieren, solange die Ausgangs-Metallverbindungen homogene Lösungen darstellen.

Die erfindungsgemäßen Metallpulver-Agglomerate eignen sich somit besonders gut zur pulvermetallurgischen Herstellung von Sinter-Legierungs-Formkörpern.

Im folgenden wird die Erfindung beispielhaft erläutert.

## 1. Beispiel (festphasensinterfähiges Schwermetall)

In 15 l destilliertem Wasser werden 4,7 kg Nickelnitrat und 1,71 kg Eisennitrat unter Erwärmen und Rühren gelöst und mit 15 kg Ammoniumparawolframat zu einer Suspension verrührt. Nach dem Sprühtrocknen und Nachglühen erhält man ein okkerfarbenes Pulver, welches nach Röntgenbeugung aus Nickel-Eisen-Wolframat und Wolframoxid besteht. Das Oxidgemisch wird anschließend mit Wasserstoff bei maximal 800°C in gewöhnlichen Reduktionsöfen zu dem Schwermetall-Legierungs-Verbundpulver reduziert.

Nach der ESCA-Analyse besteht das Pulver aus Submicrometer-Wolframpartikeln neben Nickel-Eisen-Legierungspulver in gleichmäßiger Verteilung.

Die chemische Analyse weist folgende Zusammensetzung des Pulvers auf:
Wolfram 90,64 %, Eisen 2,06 %, Nickel 7,08 %, Sauerstoff 0,20 %

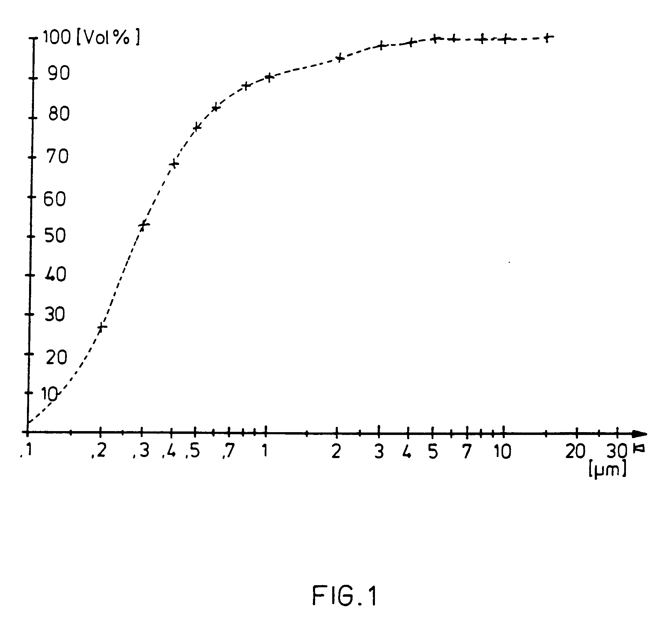

Die Korngrößenanalyse der mit einer SHIMADZU-Zentrifuge ergibt nach 10 minütiger Scherfeld-Dispergierung der deagglomerierten Partikeln in Wasser die Kornverteilung mit einer Durchschnittskorngröße (D 50/50) von 0,3 $\mu$m gemäß Fig. 1.

Die Teilchengrößenverteilung ist hier zu entnehmen. Dabei ist auf der Abzisse der Teilchendurchmesser ($\mu$m) gegen den Durchgang (Vol.-%) aufgetragen.

### Sinterproben-Test:

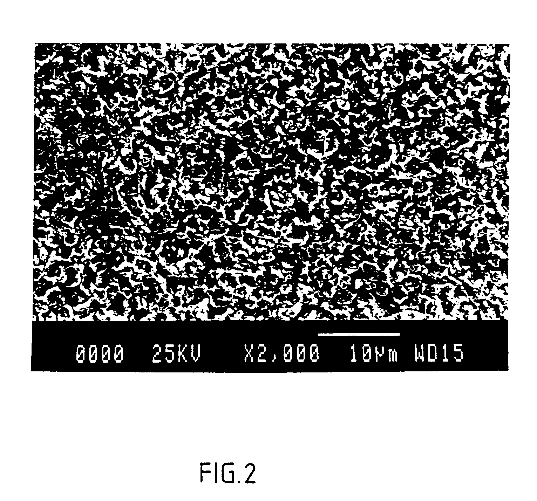

Nach Verpressen, Vorsintern unter strömenden Wasserstoff (6 h bei 920°C) und Dichtsintern bei 1250°C über 4 h schließt sich eine Entgasung bei der gleichen Temperatur im Vakuum (10 hoch minus 4 Torr) 30 Minuten lang an. Nach der Abkühlung werden folgende Werte an den Zugproben ermittelt: Zugfestigkeiten <1200 N/mm$^2$ bei Dehnungen zwischen 20 und 30 %. Die Dichte wurde zu 17,3 g/cm$^3$ ermittelt und ein Gefügeanschliff zeigt eckige W-Körner in einer porenfreien Matrix. Die Gefügestruktur der Sinterkörper-Testproben wird aus den fotographischen REM-Aufnahmen der Abbildung 2 ersichtlich.

## 2. Beispiel (Wolfram-Rhenium-Legierungspulver)

25 Liter einer Ammoniummetawolframat-Lösung, die neben 170 g/l an WO$_3$ noch 21,9 g/l Rhenium in Form von Ammoniumperrhenat enthält, werden in einem Sprühtrockner (Kompakt-Anlage der Firma ANHYDRO AS/Dänemark) zu einem Oxidgemisch sprühgetrocknet. Das Trocken-Produkt wird anschließend unter einem Wasserstoff-Strom von ca. 1,6 m/s bei einer Temperatur von 750°C in einem gasdichten Druchschubofen mit einer Verweilzeit von 4 Stunden reduziert.

Die Reaktion führt zu einem heterogenen Legierungspulver mit einer Zusammensetzung: Wolfram:Rhenium = 90/10.

Das heterogene Legierungspulver wird zur Ausbildung der Misch-Kristallphasen einer anschließenden 8-stündigen Diffusionsbehandlung bei 1300°C unterzogen, wobei man einem geschlossenen Tiegelofen ebenfalls unter Wasserstoffatmosphäre arbeitet.

Es entsteht ein homogenes Legierungspulver Wolfram/Rhenium, das nach der Röntgen-Feinstrukturanalyse kein freies Rhenium mehr enthält.

Die durchschnittliche Korngröße des fertigen Legierungspulver beträgt 0,8 $\mu$m (nach FSSS), die Schüttdichte wird zu 28,3 /cm$^3$ gemessen.

Die metallographische Untersuchung eines Sinterkörpers aus diesem Material mittels Microsonde bestätigt die gleichmäßige Verteilung des Elementes Rhenium über den gesamten Prüfkörper.

## Patentansprüche

1.    Metallpulver-Agglomerate aus Einzelpartikeln, die zu mehr als 70 Gew.-% aus einem und/oder mehreren Basismetallen der Elemente Molybdän, Rhenium oder Wolfram und zu dem bis 100 Gew.-% fehlenden Rest aus Bindermetallen aus der Gruppe Eisen, Kobalt, Nickel, Kupfer, Silber, Gold, Palladium, Platin, Rhodium, Chrom und Rhenium bestehen, wobei Rhenium entweder als Basismetall oder als Bindermetall auftritt, dadurch gekennzeichnet, daß die Einzelpartikel Korngrößen von kleiner als 2 $\mu$m aufweisen und alle Basismetallpartikel und Bindermetallpartikel in gleichmäßiger statistischer Verteilung vorliegen.

2. Metallpulver-Agglomerate gemäß Anspruch 1, dadurch gekennzeichnet, daß sie einen Sauerstoffgehalt von kleiner als 1,5 Gew.-%, vorzugsweise kleiner als 1,0 Gew.-%, aufweisen, die Korngröße der Agglomerate kleiner als 300 $\mu$m, die Korngröße der Einzelpartikel kleiner als 1 $\mu$m, vorzugsweise kleiner als 0,6 $\mu$m, ist.

3. Verfahren zur Herstellung der Metallpulver-Agglomerate gemäß einem der Ansprüche 1 oder 2, dadurch gekennzeichnet, daß Verbindungen der Basismetalle und der Bindermetalle in Flüssigkeiten gelöst und/oder homogen suspendiert werden, diese Lösungen und/oder Suspensionen zur Trockne gebracht werden und der so erhaltene feste Rückstand unterhalb 600°C nachgeröstet wird und anschließend unter reduzierenden Bedingungen bei Temperaturen von 600 bis 1200°C zum Metallpulver-Agglomerat umgesetzt werden.

4. Verfahren gemäß Anspruch 3, dadurch gekennzeichnet, daß als Verbindungen der Basismetalle Mo, Re und W die Oxide und als Verbindungen der Bindemetalle die Nitrate in gemeinsamer wäßriger Suspension eingesetzt werden.

5. Verfahren gemäß Anspruch 3, dadurch gekennzeichnet, daß als Verbindungen der Basismetalle Mo, Re und W die Ammoniumsalze der Säureanionen dieser Metalle und als Verbindungen der Bindermetalle die Nitrate in gemeinsamer wäßriger Lösung eingesetzt werden.

6. Verfahren gemäß Anspruch 3, dadurch gekennzeichnet, daß die Trocknung der Lösungen und/oder Suspensionen in Sprühtrockner-Apparaturen durchgeführt wird.

7. Verfahren gemäß Anspruch 3, dadurch gekennzeichnet, daß die Trocknung der Lösungen und/oder Suspensionen mittels Gefrier-Trocken-Verfahren durchgeführt wird.

8. Verfahren gemäß einem oder mehrerer der Ansprüche 3 bis 7, dadurch gekennzeichnet, daß die Umsetzung unter reduzierenden Bedingungen in einer Wasserstoffatmosphäre in einem Drehrohrofen kontinuierlich durchgeführt wird.

9. Verfahren gemäß einem oder meherer der Ansprüche 3 bis 7, dadurch gekennzeichnet, daß die Umsetzung unter reduzierenden Bedingungen in einem Schiffchen-Durchschubofen als halbkontinuierliches Verfahren durchgeführt wird.

**Claims**

1. Metal powder agglomerates of individual particles of which more than 70% by weight consists of one and/or more base metals of the elements molybdenum, rhenium or tungsten and the rest (balance to 100% by weight) of binder metals from the group consisting of iron, cobalt, nickel, copper, silver, gold, palladium, platinum, rhodium, chromium and rhenium, rhenium occurring either as the base metal or as the binder metal, characterized in that the individual particles have particle sizes of less than 2 $\mu$m and all the base metal particles and binder metal particles are present in uniform statistical distribution.

2. Metal powder agglomerates as claimed in claim 1, characterized in that they have an oxygen content of less than 1.5% by weight and preferably less than 1.0% by weight, the particle size of the agglomerates is less than 300 $\mu$m and the particle size of the individual particles is less than 1 $\mu$m and preferably less than 0.6 $\mu$m.

3. A process for the production of the metal powder agglomerates claimed in claim 1 or 2, characterized in that compounds of the base metals and/or binder metals are dissolved and/or homogeneously suspended in liquids, the resulting solutions and/or suspensions are dried and the solid residue obtained is subsequently roasted at temperatures below 600°C and then reacted under reducing conditions at temperatures of 600 to 1200°C to form the metal powder agglomerate.

4. A process as claimed in claim 3, characterized in that the oxides are used as the compounds of the base metals Mo, Re and W while the nitrates are used as the compounds of the binder metals in one and the same aqueous suspension.

5. A process as claimed in claim 3, characterized in that the ammonium salts of the acid anions of the base metals Mo, Re and W are used as the compounds of those base metals while the nitrates are used as the compounds of the binder metals in one and the same aqueous solution.

6. A process as claimed in claim 5, characterized in that the solutions and/or suspensions are dried in spray dryers.

7. A process as claimed in claim 3, characterized in that the solutions and/or suspensions are dried by freeze drying.

8. A process as claimed in one or more of claims 3 to 7, characterized in that the reaction is carried out continuously under reducing conditions in a hydrogen atmosphere in a rotary kiln.

9. A process as claimed in claim one or more of claims 3 to 7, characterized in that the reaction is carried out semi-continuously under reducing conditions in a boat-type sliding bat kiln.

**Revendications**

1. Agglomérats de poudre métallique, formés de particules individuelles qui consistent pour plus de 70 % en poids en un et/ou plusieurs métaux de base choisis parmi les éléments molybdène, rhénium ou tungstène (Wolfram) et, pour le complément à 100 % en poids, parmi les métaux de liaison choisis dans l'ensemble formé par le fer, le cobalt, le nickel, le cuivre, l'argent, l'or, le palladium, le platine, le rhodium, le chrome et le rhénium, le rhénium étant présent comme métal de base ou comme métal de liaison, agglomérats caractérisés en ce que les particules individuelles présentent des grosseurs de grain inférieures à 2 $\mu$m et toutes les particules du métal de base et les particules du métal de liaison sont présentes en une répartition statistique uniforme.

2. Agglomérats d'une poudre de métal selon la revendication 1, caractérisés en ce qu'ils présentent une teneur en oxygène inférieure à 1,5 % en poids, avantageusement inférieure à 1,0 % en poids, en ce que la grosseur des grains des agglomérats est inférieure à 300 $\mu$m, et la grosseur des grains des particules individuelles est inférieure à 1 $\mu$m, avantageusement inférieure à 0,6 $\mu$m.

3. Procédé pour préparer des agglomérats de poudre métallique selon l'une des revendications 1 ou 2, procédé caractérisé en ce qu'on dissout des composés des métaux de base et des métaux de liaison dans des liquides et/ou on les y met en suspension homogène, on porte à siccité ces solutions et/ou suspensions et l'on soumet à une post-calcination au-dessous de 600°C le résidu solide ainsi obtenu puis on le fait réagir dans des conditions réductrices à des températures de 600 à 1200°C pour obtenir de l'agglomérat de poudre de métal.

4. Procédé selon la revendication 3, caractérisé en ce qu'on utilise, dans une suspension aqueuse commune, comme composés des métaux de base Mo, Re et W les oxydes et, comme composés des métaux de liaison, les nitrates.

5. Procédé selon la revendication 3, caractérisé en ce qu'on utilise dans une solution aqueuse commune, comme composés des métaux de base Mo, Re et W, les sels d'ammonium des anions d'acides dérivant de ces métaux, et, comme composés des métaux de liaison des nitrates.

6. Procédé selon la revendication 3, caractérisé en ce qu'on conduit le séchage des solutions et/ou des suspensions dans des appareils de séchage par atomisation.

7. Procédé selon la revendication 3, caractérisé en ce qu'on conduit le séchage des solutions et/ou des suspensions à l'aide d'un procédé de séchage par lyophilisation.

8. Procédé selon une ou plusieurs des revendications 3 à 7, caractérisé en ce qu'on conduit en continu la réaction, dans des conditions réductrices en atmosphère d'hydrogène dans un four tubulaire rotatif.

9. Procédé selon une ou plusieurs des revendications 3 à 7, caractérisé en ce qu'on conduit sous forme d'un procédé semi-continu la réaction dans des conditions réductrices dans un four poussant avec utilisation de nacelles.

FIG.1

0000    25KV      X2,000    10μm  WD15

FIG.2